# EUROPEAN PATENT SPECIFICATION

(11) **EP 4 464 457 B1**
(45) Date of publication and mention of the grant of the patent: **04.06.2025**
(21) Application number: 24161559.0
(22) Date of filing: 05.03.2024
(51) Int. Cl.: B23Q 1/62, B23Q 11/08, B23Q 39/02, B23Q 39/04

(54) **LATERAL PROCESSING MACHINE**
SEITENBEARBEITUNGSMASCHINE
MACHINE DE TRAITEMENT LATÉRAL

(30) Priority: 15.05.2023 JP 2023080267
(43) Date of publication of application: 20.11.2024
(73) Proprietor: Sugino Machine Limited, Namerikawa City, Toyama 936-8577 (JP)
(72) Inventor: OTANI, Hideyoshi, Namerikawa City, Toyama, 9368577 (JP); HAREMAKI, Hiroki, Namerikawa City, Toyama, 9368577 (JP); EGAWA, Ryo, Namerikawa City, Toyama, 9368577 (JP)
(74) Representative: Global IP Europe Patentanwaltskanzlei

(56) References cited:
- CN-A- 109 262 371
- JP-A- S62 218 008
- ANONYMOUS: "Xflex Twin Machining Centers | Etxetar", 13 September 2019 (2019-09-13), XP093067031, Retrieved from the Internet <URL:https://www.etxetar.com/en/products/machine-centers/xflex-twin> [retrieved on 20230725]

## Description

### BACKGROUND

### 1. Technical Field

The present invention relates to a lateral processing machine.

### 2. Description of the Background

A conventional lateral machine tool includes an X-axis guide rail disposed on an upper surface of a bed, a column mounted on the X-axis guide rail and movable in X direction, a Y-axis guide rail disposed on one side surface of the column, a saddle supported by the Y-axis guide rail and movable in Y direction, a Z-axis guide rail disposed on the saddle, and a spindle head supported in a horizontal posture by the Z-axis guide rail (Japanese Patent No. 4514310).

CN 109 262 371 A discloses a horizontal type machining center. The horizontal type machining center comprises a base, above the front end of the base is provided with a Z-axis guide rail, and above the rear end of the base is provided with is provided with a separating frame and stand columns behind the separating frame; above the Z-axis guide rail an index plate body is slidingly mounted; an switchboard support base is mounted above the base and in front of the index plate body; a first index table is mounted above the switchboard support base; a second index table is mounted above the first index table; a switchboard rotating base is connected between the first index table and the second index table. The horizontal type machining center comprises the two index tables, when one of the index tables is applied to machining parts, the other index table can change replace machined parts with blank parts, so that high working efficiency can be achieved.

In JP S62 218 008 A for the movement to each of X, Y, Z axial directions, respective drive means are provided so as to control the movement of a plurality of spindles - equipped with work tools - separately. When a hole is drilled on one surface of a work, each of the spindles is moved from their original positions to the X and Y axial directions for making them cover each one quarter of one surface area of the work. Subsequently, the spindle is moved to the Z axial direction for drilling a hole.

### BRIEF SUMMARY

In a case where there are a large number of processing portions of a workpiece, it is desired to shorten the processing time. Further, it is desired to prevent foreign matters such as chips from adhering to the driving unit.

An object of the present invention is to provide a multi-axis lateral processing machine capable of separating a drive unit from a processing region.

A first aspect of the present invention provides a lateral processing machine, including:
a bed;
a floor surface X-axis guide disposed on an upper surface of the bed;
a first moving column guided by the floor surface X-axis guide to reciprocate in X direction;
a first Y-axis guide disposed on the first moving column;
a first processing unit guided by the first Y-axis guide to reciprocate in Y direction, the first processing unit includes a first ram that rotatably supports a first spindle and advances or retracts in Z direction;
a second processing unit guided by the first Y-axis guide to reciprocate in Y direction, the second processing unit includes a second ram that rotatably supports a second spindle and advances or retract in Z direction; and
an expansion cover including,
   a box cover disposed on the bed,
   a first X box extending in Y direction inside the box cover to reciprocate in X direction together with the first moving column,
   a first X telescopic cover configured to cover between the first X box and the box cover,
   a first Y box receiving the first ram to extend through, the first Y box configured to reciprocate in Y direction inside the first X box,
   a second Y box receiving the second ram to extend through, the second Y box configured to reciprocate in Y direction inside the first X box,
   a first Y telescopic cover configured to cover between the first Y box and the first X box,
   a second Y telescopic cover configured to cover between the first Y box and the second Y box, and
   a third Y telescopic cover configured to cover between the second Y box and the first X box.

A second aspect of the present invention provides a lateral processing machine, including:
a bed;
a floor surface X-axis guide disposed on an upper surface of the bed;
a first moving column guided by the floor surface X-axis guide to reciprocate in X direction;
a first Y-axis guide disposed on the first moving column;
a first processing unit guided by the first Y-axis guide to reciprocate in Y direction, the first processing unit includes a first ram that rotatably supports a first spindle and advances or retracts in Z direction;
a second processing unit guided by the first Y-axis guide to reciprocate in Y direction, the second processing unit includes a second ram that rotatably supports a second spindle and advances or retract in Z direction;
a first tool changer disposed on the bed to exchange a tool with the first spindle positioned at a first tool changing position; and
a second tool changer disposed on the bed to exchange the tool with the second spindle positioned at a second tool changing position when the first spindle is positioned at the first tool changing position.

A third aspect of the present invention provides a tool changer for exchanging a tool with a spindle positioned at tool changing position, the tool changer including:
a magazine disk rotatably supported;
a cam having a disk-shaped plate, the cam having a contour recessed by a stroke length at the tool changing position;
a plurality of tool holding portions disposed on an outer periphery of the magazine disk, the tool holding portions each includes,
   a pinch lever swingably supported by the magazine disk, the pinch lever including,
      a claw portion disposed at a distal end of the pinch lever to hold the tool, and
      a lever portion having a roller cam, the lever portion disposed at a basal end of the pinch lever,
   a first elastic member configured to bias the lever portion so as to separate each other,
   a cylinder having a cylinder chamber, the cylinder disposed on the magazine disk,
   a plunger configured to reciprocate in the cylinder chamber, the plunger including,
      a V-plane disposed at a distal end of the plunger to contact the roller cam, and
      a cam follower disposed at a basal end of the plunger, and
   a second elastic member configured to bias the plunger toward the distal end for the V-plane to be pressed against the roller cam to close the pinch lever,
when the tool holding portion is positioned other than the tool changing positions, the cam follower is in contact with the cam to close the pinch lever, and
when the tool holding portion is positioned at the tool changing positions, the plunger retracts by the stroke length to open the pinch lever for the tool to be exchanged with the spindle.

The first Y box may include a first box hole through which the first ram extends. The first processing unit may include a first body. The first body may extend through the first box hole. The first Y box may include a first packing that seals a gap between the first body and the first box hole.

The second Y box may include a second box hole through which the second ram extends. The second processing unit may include a second body. The second body may extend through the second box hole. The second Y box may include a second packing that seals a gap between the second body and the second box hole.

The third Y box may include a third box hole through which the third ram extends. The third processing unit may include a third body. The third body may extend through the third box hole. The third Y box may include a third packing that seals a gap between the third body and the third box hole.

The fourth Y box may include a fourth box hole through which the fourth ram extends. The fourth processing unit may include a fourth body. The fourth body may extend through the fourth box hole. The fourth Y box may include a fourth packing that seals a gap between the fourth body and the fourth box hole.

The expansion cover is, for example, a bellows, a roll cover, or a telescopic cover.

The lateral processing machine may include a second lower X-axis driving device that is disposed on the bed and drives a lower end portion of the second moving column in X direction, and a second upper X-axis driving device that is disposed above the bed and drives an upper end portion of the second moving column in X direction in synchronization with the second lower X-axis driving device.

The first upper X-axis driving device may be disposed on the fixed beam. The second upper X-axis driving device may be disposed on the fixed beam.

The second lower X-axis driving device may include a lower X helical rack, a second lower X helical gear that meshes with the lower X helical rack, and a second lower X motor connected to the second lower X helical gear and disposed on a lower end portion of the second moving column.

The second upper X-axis driving device may include an upper X helical rack, a second upper X helical gear that meshes with the upper X helical rack, and a second upper X motor connected to the second upper X helical gear and disposed on an upper end portion of the second moving column.

The lateral processing machine may include a first Y-axis driving device disposed on the first moving column. The first Y-axis driving device may include a first Y helical rack disposed on the first moving column, a first Y helical gear that meshes with the first Y helical rack, and a first Y motor connected to the first Y helical gear and disposed in the first processing unit. The first Y-axis driving device may be disposed on a first X side of the first moving column. The first Y helical rack may be disposed on the first X side of the first moving column.

The lateral processing machine may include a second Y-axis driving device disposed on the first moving column. The second Y-axis driving device may include the first Y helical rack, a second Y helical gear that meshes with the first Y helical rack, and a second Y motor connected to the second Y helical gear and disposed in the second processing unit. The second Y-axis driving device may be disposed on a first X side of the first moving column.

The lateral processing machine may include a third Y-axis driving device disposed on the second moving column. The third Y-axis driving device may include a second Y helical rack disposed on the second moving column, a third Y helical gear that meshes with the second Y helical rack, and a third Y motor connected to the third Y helical gear and disposed in the third processing unit.

The third Y-axis driving device may be disposed on a second X side of the second moving column. The second Y helical rack may be disposed on a second X side of the second moving column.

The lateral processing machine may include a fourth Y-axis driving device disposed on the second moving column. The fourth Y-axis driving device may include the second Y helical rack, a fourth Y helical gear that meshes with the second Y helical rack, and a fourth Y motor connected to the fourth Y helical gear and disposed in the fourth Y processing unit. The fourth Y-axis driving device may be disposed on a second X side of the second moving column.

The lateral processing machine may include a first Y base and a second Y base that are guided by the first Y-axis guide to move in Y direction. The first processing unit may be removably disposed on the first Y base. The lateral processing machine may include a first fastening member for fastening the first processing unit to the first Y base.

The second processing unit may be removably disposed on the second Y base. The lateral processing machine may include a second fastening member for fastening the second processing unit to the second Y base.

The lateral machine may include a third Y base and a fourth Y base that are guided by the second Y-axis guide to move in Y direction. The third processing unit may be removably disposed on the third Y base. The lateral processing machine may include a third fastening member for fastening the third processing unit to the third Y base.

The fourth processing unit may be removably disposed on the fourth Y base. The lateral processing machine may include a fourth fastening member for fastening the fourth processing unit to the fourth Y base.

The ram can be replaced with a spindle head. The body can be replaced with a Z base.

The first spindle may have a first spindle hole. The first spindle may include a first tool unclamping device.

The second spindle may have a second spindle hole. The second spindle may include a second tool unclamping device.

The third spindle may have a third spindle hole. The third spindle may include a third tool unclamping device.

The fourth spindle may have a fourth spindle hole. The fourth spindle may include a fourth tool unclamping device.

The first spindle is configured to move toward a second X direction to reach a first tool changing position.

The second spindle is configured to move toward the second X direction to reach a second tool changing position. The second spindle is configured to reach the second tool changing position at the same time that the first spindle reaches the first tool changing position.

The third spindle is configured to move toward a first X direction to reach a third tool changing position.

The fourth spindle is configured to move toward a first X direction to reach a fourth tool changing position. The fourth spindle is configured to reach the fourth tool changing position at the same time that the third spindle reaches the third tool changing position.

The first spindle may be configured not to interfere with the first tool changer when positioned at the first tool changing position. The first shutter of the first tool changer may be configured not to interfere with the first spindle located at the first tool changing position when the first shutter is at the processing position.

The second spindle may be configured not to interfere with the second tool changer when positioned at the second tool changing position. The second shutter of the second tool changer may be configured not to interfere with the second spindle located at the second tool changing position when the second shutter is at the processing position.

The third spindle may be configured not to interfere with the third tool changer when positioned at the third tool changing position. The third shutter of the third tool changer may be configured not to interfere with the third spindle located at the third tool changing position when the third shutter is at the processing position.

The fourth spindle may be configured not to interfere with the fourth tool changer when positioned at the fourth tool changing position. The fourth shutter of the fourth tool changer may be configured not to interfere with the fourth spindle located at the fourth tool changing position when the fourth shutter is at the processing position.

The lateral processing machine may include,
a pair of fixed support columns disposed at both ends of the bed in X direction,
a fixed beam bridged between upper ends of the pair of the fixed support columns, and
an upper X-axis guide disposed on the fixed beam.

The lateral processing machine may include,
a first lower X-axis driving device disposed on the bed to drive a lower end portion of the first moving column in X direction, and
a first upper X-axis driving device disposed above the bed to drive an upper end portion of the first moving column in X direction in synchronization with the first lower X-axis driving device.

The first lower X-axis driving device may include,
a lower X helical rack disposed on the bed,
a first lower X helical gear that meshes with the lower X helical rack, and
a lower X motor connected to the first lower X helical gear, the lower X motor disposed on a lower end portion of the first moving column.

The first upper X-axis driving device may include,
an upper X helical rack disposed on an X fixed beam,
a first upper X helical gear that meshes with the upper X helical rack, and
an upper X motor connected to the first upper X helical gear, the upper X motor disposed on an upper end portion of the first moving column.

According to the present invention, a multi-axial lateral processing machine capable of separating a drive unit from a processing region is provided.

### BRIEF DESCRIPTION OF DRAWINGS

FIG. 1 is a perspective view of a lateral processing machine according to an embodiment.
FIG. 2 is a perspective view of the lateral processing machine according to the embodiment.
FIG. 3 shows a view along an arrow III in FIG. 1.
FIG. 4 is a cross-sectional view taken along line IV-IV in FIG. 3.
FIG. 5 is a cross-sectional view taken along line V-V in FIG. 4.
FIG. 6 is a cross-sectional view taken along line VI-VI in FIG. 4.
FIG.7 shows a view along an arrow VII in FIG. 1.
FIG. 8 is a cross-sectional view taken along line VIII-VIII in FIG. 7.

### DETAILED DESCRIPTION

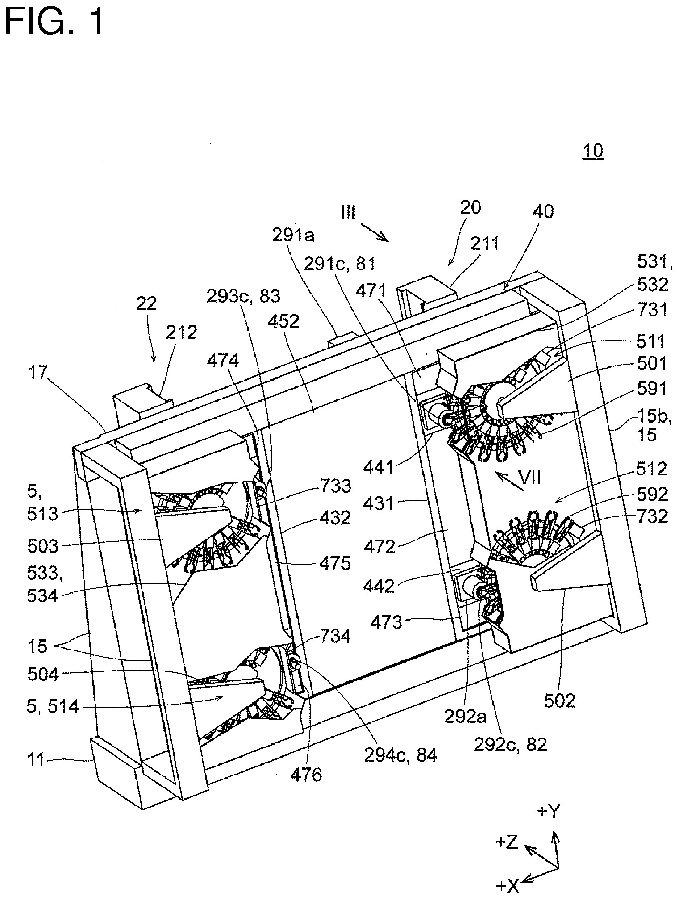

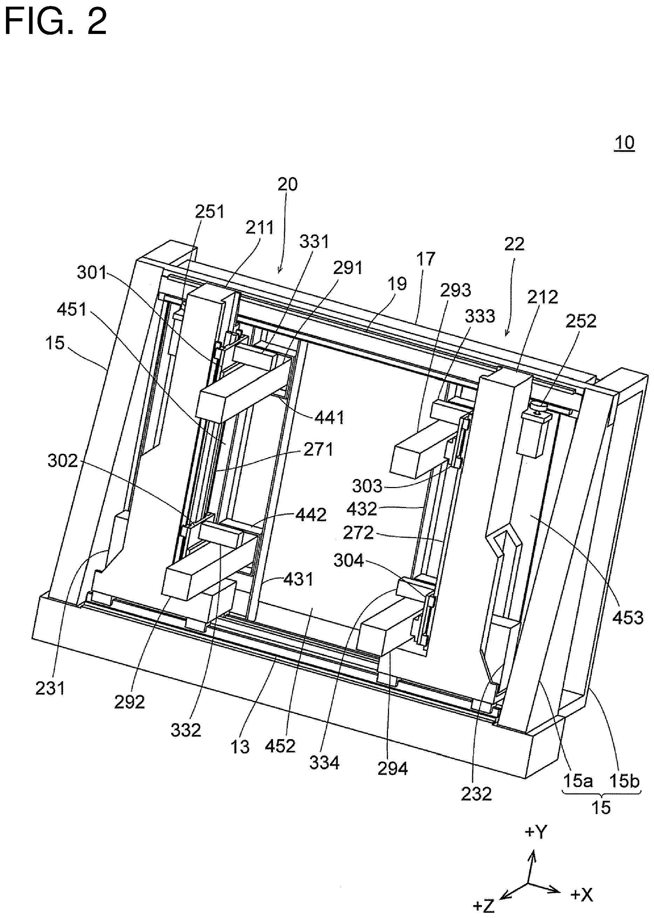

As shown in FIGs. 1 and 2, a lateral processing machine 10 according to an embodiment includes a bed 11, a pair of floor surface X-axis guides 13, a pair of fixed support columns 15, a fixed beam 17, an upper X-axis guide 19, a first processing unit group 20, a second processing unit group 22, a bellows cover (expansion cover) 40, a first ATC (first automatic tool changer) 511, a second ATC (second automatic tool changer) 512, a third ATC (third automatic tool changer) 513, and a fourth ATC (fourth automatic tool changer) 514.

For convenience, the left-right direction is defined as an X direction (the left as viewed from the front is defined as +X direction), the vertical direction is defined as a Y direction (the upward is defined as +Y direction), and the front-rear direction is defined as a Z direction (the back as viewed from the front is defined as +Z direction).

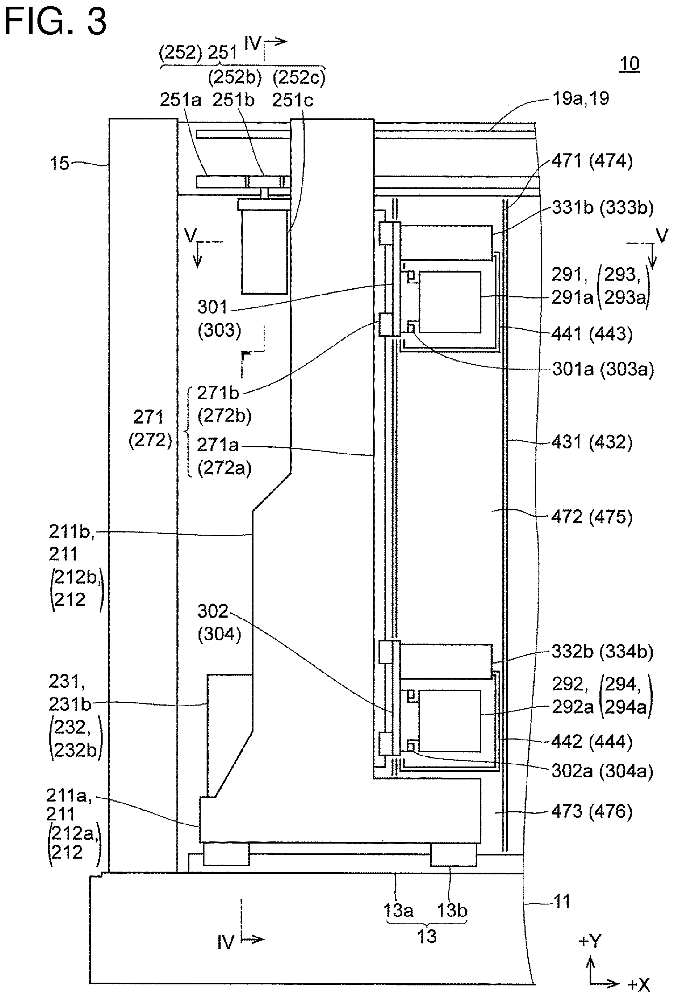

As shown in FIG. 3, the floor surface X-axis guide 13 includes a lower X guide rail 13a and a lower X guide block 13b. The floor surface X-axis guide 13 extends in X direction. The lower X guide rail 13a, which extends in X direction, is fixed to the upper surface of the bed 11. The lower X guide block 13b, which is disposed on the lower X guide rail 13a, moves in X direction.

As shown in FIG. 2, the pair of fixed support columns 15 are disposed at both end portions of the bed 11 in X direction. The fixed support column 15 includes a main column 15a and a sub-column 15b. The fixed support column 15 has a closed shape when viewed from Y direction. The sub-column 15b is disposed frontward (-Z direction) from the main column 15a.

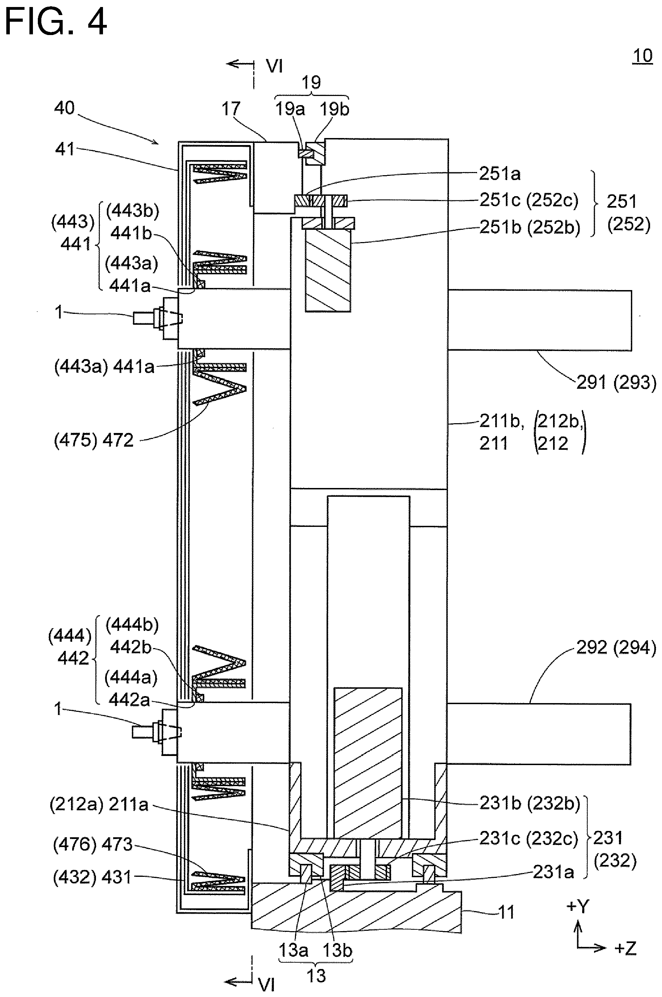

The fixed beam 17 is bridged between the upper end portions of the pair of fixed support columns 15. The fixed beam 17 extends in X direction. As shown in FIG. 4, the upper X-axis guide 19 includes an upper X guide rail 19a and an upper X guide block 19b. The upper X guide rail 19a, which extends in X direction, is fixed to the rear surface of the fixed beam 17. The upper X guide block 19b, which is disposed on the upper X guide rail 19a, moves in X direction.

As shown in FIGs. 3 to 6, the first processing unit group 20 includes a first moving column 211, a first lower X-axis driving device 231, a first upper X-axis driving device 251, a first Y-axis guide 271, a first Y base 301, a first processing unit 291, a first Y-axis driving device 331, a second Y base 302, a second processing unit 292, and a second Y-axis driving device 332.

As shown in FIG. 3, the first moving column 211 includes a base portion 211a and a column portion 211b. The base portion 211a is fastened to the lower X guide block 13b. The base portion 211a has a rectangular parallelepiped shape. The column portion 211b is disposed in -X direction of the base portion 211a. The column portion 211b has, for example, a rectangular cross-section. The column portion 211b has an upper end portion fastened to the upper X guide block 19b.

As shown in FIG. 4, the first lower X-axis driving device 231 includes a lower X helical rack 231a, a first lower X motor 231b, and a first lower X helical gear 231c. The lower X helical rack 231a, which extends in X direction, is fixed to the bed 11. The first lower X motor 231b is disposed on the base portion 211a. The first lower X helical gear 231c, which is connected to the first lower X motor 231b, meshes with the lower X helical rack 231a.

As shown in FIG. 4, the first upper X-axis driving device 251 includes an upper X helical rack 251a, a first upper X motor 251b, and a first upper X helical gear 251c. The upper X helical rack 251a, which extends in X direction, is fixed to the rear surface of the fixed beam 17. The first upper X motor 251b is fastened in the upper portion of the column portion 211b. The first upper X motor 251b rotates in synchronization with the first lower X motor 231b. The first upper X helical gear 251c, which is connected to the first upper X motor 251b, meshes with the upper X helical rack 251a.

As shown in FIG. 3, the first Y-axis guide 271 includes a Y guide rail 271a and a plurality of Y guide blocks 271b. The Y guide rail 271a, which extends in Y direction, is disposed in +X direction of the first moving column 211. The Y guide block 271b, which is disposed on the Y guide rail 271a, moves in Y direction.

The first Y base 301 is fastened to the Y guide block 271b. The first Y base 301 may include a bolt (first fastening member) 301a.

The second Y base 302 is fastened to the Y guide block 271b. The second Y base 302 may include a bolt (second fastening member) 302a.

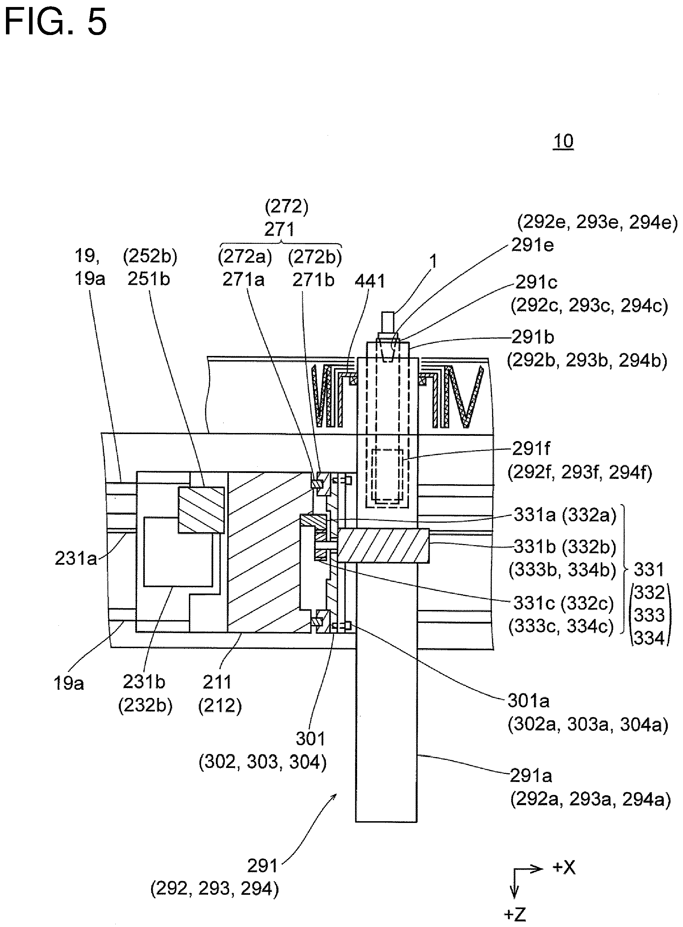

As shown in FIG. 5, the first Y-axis driving device 331 includes a first Y helical rack 331a, a first Y motor 331b, and a first Y helical gear 331c. The first Y helical rack 331a, which extends in Y direction, is disposed on the first moving column 211. The first Y helical rack 331a is disposed on a side surface of the column portion 211b in +X direction.

The first Y motor 331b is fastened to the first Y base 301. The first Y helical gear 331c, which is connected to the first Y motor 331b, engages with the first Y helical rack 331a.

As shown in FIG. 5, the first processing unit 291 includes a first body 291a, a first ram 291b, and a first spindle 291c. The first body 291a has a prismatic shape extending in Z direction. The first body 291a is coupled to the first Y base 301 with the bolt 301a. The first ram 291b protrudes forward of the bellows cover 40 from a distal end portion of the first body 291a. The first ram 291b is guided in Z direction. The first ram 291b moves forward and backward in Z direction. The first spindle 291c is rotatably supported by the first ram 291b. The first spindle 291c includes a first spindle hole 291e and an unclamping device 291f. The unclamping device 291f clamps and unclamps a tool 1 mounted in the first spindle hole 291e. The first processing unit 291 is removably coupled to the first Y base 301.

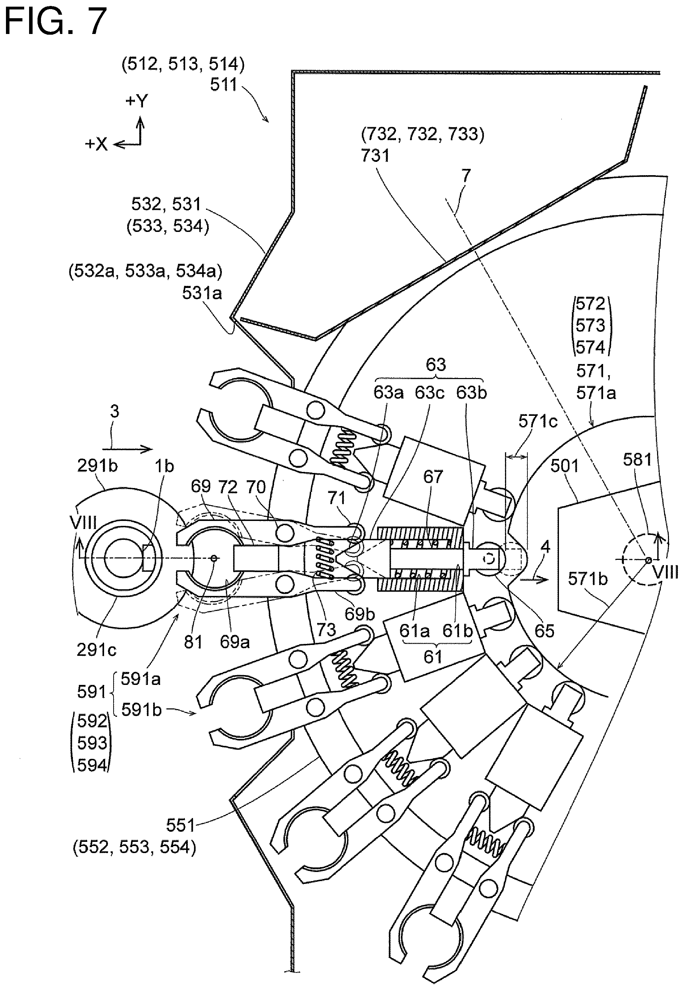

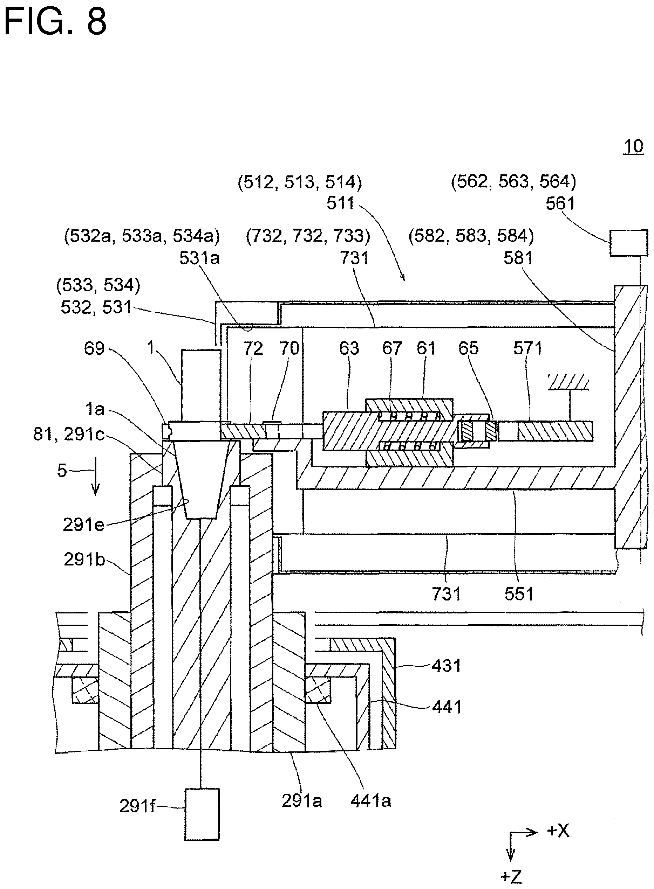

The tool 1 is mounted in the first spindle hole 291e. As shown in FIGs. 7 and 8, the tool 1 includes a tapered shank 1a (see FIG. 8) and a keyway 1b (see FIG. 7). The tapered shank 1a abuts the first spindle hole 291e.

As shown in FIGs. 2 and 5, the second Y-axis driving device 332 includes a first Y helical rack 331a, a second Y motor 332b, and a second Y helical gear 332c. The second Y motor 332b is fastened to the second Y base 302. The second Y helical gear 332c, which is connected to the second Y motor 332b, meshes with the first Y helical rack 331a.

The second processing unit 292 includes a second body 292a, a second ram 292b, and a second spindle 292c. The second processing unit 292 is disposed in -Y direction (first Y direction) from the first processing unit 291. The second processing unit 292 is detachably coupled to the second Y base 302 with a second fastening member 302a. The second processing unit 292 is substantially identical to the first processing unit 291.

As shown in FIG. 2, the second processing unit group 22 includes a second column (second moving column) 212, a second lower X-axis driving device 232, a second upper X-axis driving device 252, a second Y guide 272, a third Y base 303, a third processing unit 293, a third Y-axis driving device 333, a fourth Ybase 304, a fourth processing unit 294, and a fourth Y-axis driving device 334. The second processing unit group 22 is disposed in +X direction (first X direction) from the first processing unit group 20. The second processing unit group 22 is symmetrical with respect to a plane YZ from the first processing unit group 20.

As shown in FIG. 3, the third Y base 303 may include a third fastening member 303a. The fourth Y base 304 may include a fourth fastening member 304a.

As shown in FIG. 4, the second lower X-axis driving device 232 includes a lower X helical rack 231a, a second lower X motor 232b, and a second lower X helical gear 232c.

The second upper X-axis driving device 252 includes an upper X helical rack 252a, a second upper X motor 252b, and a second upper X helical gear 232c.

As shown in FIG. 5, the third Y-axis driving device 333 includes a second Y helical rack 332a, a third Y motor 333b, and a third Y helical gear 333c.

The fourth Y-axis driving device 334 includes a second Y helical rack 332a, a fourth Y motor 334b, and a fourth Y helical gear 334c.

The third processing unit 293 includes a third body 293a, a third ram 293b, and a third spindle 39c. The third processing unit 293 is removably coupled to the third Y base 303.

The fourth processing unit 294 is disposed in -Y direction (first Y direction) from the third processing unit 293. The fourth processing unit 294 includes a fourth body 294a, a fourth ram 294b, and a fourth spindle 294c. The fourth processing unit 294 is removably coupled to the fourth Y base 304.

The third processing unit 293 and the fourth processing unit 294 are substantially the same as the first processing unit 291.

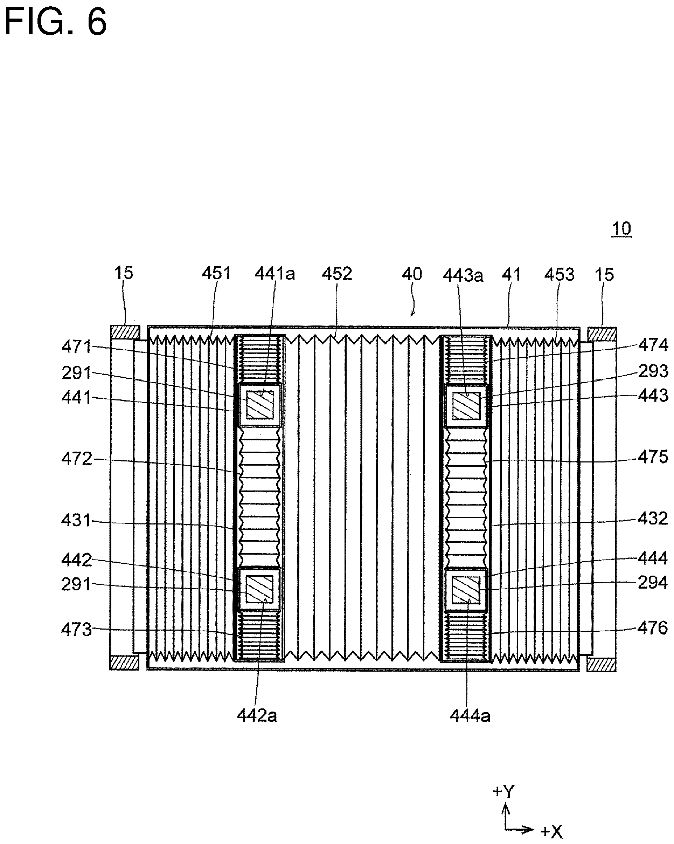

As shown in Fig. 6, the bellows cover 40 includes a box cover 41, a first X box 431, a second X box 432, a first X bellows (first X telescopic cover) 451, a second X bellows (second X telescopic cover) 452, a third X bellows (third X telescopic cover) 453, a first Ybox 441, a second Y box 442, a third Y box 443, a fourth Y box 444, a first Y bellows (first Y telescopic cover) 471, a second Y bellows (second Y telescopic cover) 472, a third Y bellows (third Y telescopic cover) 473, a fourth Y bellows (fourth Y telescopic cover) 474, a fifth Y bellows (fifth Y telescopic cover) 475, and a sixth Y bellows (sixth Y telescopic cover) 476.

The box cover 41 is fixed to the fixed support column 15. The box cover 41, which has a box shape, has a large opening in Z direction.

The first X box 431, which has a box shape extending in Y direction, has a large opening in Z direction. The first X box 431, which is disposed in the box cover 41, reciprocates in X direction. The second X box 432 is substantially identical to the first X box 431. The second X box 432 is disposed in the +X side from the first X box 431.

The first Y box 441, which has a box shape, is disposed inside the first X box 431. The first Y box 441 reciprocates in Y direction. As shown in FIG. 4, the first Y box 441 includes a box hole 441a and a packing 441b. The first body 291a extends through the box hole 441a. The packing 441b seals a gap between the first body 291a and the first box hole 441a.

The second Y box 442 includes a second box hole 442a and a second packing 442b. The second Y box 442 is substantially identical to the first X box 431.

The third Y box 443 includes a third box hole 443a and a third packing 443b. The third Y box 443 is substantially identical to the first X box 431.

The fourth Y box 444 includes a fourth box hole 444a and a fourth packing 444b. The fourth Y box 444 is substantially identical to the first X box 431.

As shown in FIG. 6, the first X bellows 451 is disposed in the box cover 41 to connect the box cover 41 and the first X box 431. The first X bellows 451 expands and contracts as the first X box 431 reciprocates.

The second X bellows 452 is disposed in the box cover 41 to connect the first X box 431 and the second X box 432. The second X bellows 452 expands and contracts as the first X box 431 and the second X box 432 reciprocate.

The third X bellows 453 is disposed in the box cover 41 to connect the box cover 41 and the second X box 432. The third X bellows 453 expands and contracts as the second X box 432 reciprocates.

The first Y bellows 471 is disposed in the first X box 431 to connect the first X box 431 and the first Y box 441. The first Y bellows 471 expands and contracts as the first Y box 441 reciprocates.

The second Y bellows 472 is disposed in the first X box 431 to connect the first Y box 441 and the second Y box 442. The second Y bellows 472 expands and contracts as the first Y box 441 and the second Y box 442 reciprocate.

The third Y bellows 473 is disposed in the first X box 431 to connect the first X box 431 and the second Y box 442. The third Y bellows 473 expands and contracts as the second Y box 442 reciprocates.

The fourth Y bellows 474 is disposed in the second X box 432 to connect the second X box 432 and the third Y box 443. The fourth Y bellows 474 expands and contracts as the third Y box 443 reciprocates.

The fifth Y bellows 475 is disposed in the second X box 432 to connect the third Y box 443 and the fourth Y box 444. The fifth Y bellows 475 expands and contracts as the third Y box 443 and the fourth Y box 444 reciprocate.

The sixth Y bellows 476 is disposed in the second X box 432 to connect the second X box 432 and the fourth Y box 444. The sixth Y bellows 476 expands and contracts as the fourth Y box 444 reciprocates.

As shown in FIG. 1, the first ATC 511 and the second ATC 512 are disposed in -X direction from the first processing unit group 20. The second ATC 512 is disposed in -Y direction (first Y direction) from the first ATC 511.

As shown in FIGs. 7 and 8, the first ATC 511 includes a frame 501, a magazine cover (first magazine cover) 531, a magazine disk (first magazine disk) 551, a cam 571, a motor 561, a plurality of tool holding portions (first tool holding portions) 591, a shutter (first shutter) 731, and a rotary shaft 581.

For convenience, the first ATC 511 of FIG. 7 shows a state of being rotated 120 degrees counterclockwise as viewed from the front from the state of FIG. 1.

The frame 501 extends toward -X direction from the sub-column 15b. The frame 501 supports the magazine disk 551, the magazine cover 531, the cam 571, and the motor 561. The motor 561 rotates the magazine disk 551.

The magazine cover 531 has a tool change port (first tool change port) 531a. The tool change port 531a is disposed in the first X direction (+X direction) from the magazine cover 531. The tool change port 531a has a rectangular shape as viewed from X direction. As viewed from the front (-Z direction), the tool change port 531a is C-shaped and recessed in -X direction.

The magazine disk 551 has the rotary shaft 581. The magazine disk 551 rotates about the rotary shaft 581. The magazine disk 551 is connected to the motor 561. The motor 561 positions any one of the tool holding portions 591 or a shutter centerline 7 at the tool changing position 81. The shutter centerline 7 connects the shutter 731 and the center of the rotary shaft 581.

The cam 571 is fixed to the frame 501. The cam 571 is a disk-shaped plate cam. The cam 571 has a contour 571a. The contour 571a has a distance 571b equal from the rotary shaft 581 except for the tool changing position 81. The contour 571a is shorter by a stroke length 571c from the distance 571b at the tool changing position 81.

The tool holding portion 591 includes a tool holding portion 591a and a tool holding portion 591b. In FIG. 7, the tool holding portion 591a is located at the tool changing position 81. The tool holding portion 591b is located other than the tool changing position 81.

The tool holding portion 591 is disposed on an outer peripheral portion of the magazine disk 551. The tool holding portion 591 includes a pair of pinch levers 69, a pinch pin 70, a roller cam 71, a compression coil spring (first elastic body) 73, a key 72, a cylinder 61, a plunger 63, a compression coil spring (second elastic body) 67, and a cam follower 65. Hereinafter, the radially outward from the magazine disk 551 is referred to as a distal end direction, and the radially inward from the magazine disk 551 is referred to as a basal end direction.

The pinch lever 69 includes a claw portion 69a and a lever portion 69b. The claw portion 69a is a distal end portion of the pinch lever 69. The claw portion 69a holds the tool 1. The lever portion 69b is a basal end portion of the pinch lever 69. The pair of pinch levers 69 is swingably supported by the magazine disk 551 with the pinch pin 70. The pinch pin 70 supports a central portion of the pinch lever 69. The compression coil spring 73 is disposed between the pair of lever portions 69b to bias the lever portion 69b so as to separate each other. The roller cam 71 is disposed at a basal end portion of the lever portion 69b. The roller cam 71 may be omitted. The compression coil spring 73 may be omitted.

The key 72 is disposed between the pair of pinch levers 69. The key 72 is fixed to the magazine disk 551. The key 72 is inserted into the keyway 1b when the pinch lever 69 holds the tool 1.

The cylinder 61 includes a cylinder chamber 61a and a rod hole 61b. The cylinder 61 has, for example, a prismatic shape. The cylinder 61 is disposed on the magazine disk 551. The cylinder chamber 61a extends in a radial direction of the magazine disk 551. The rod hole 61b, which is disposed at the basal end portion of the cylinder 61, is connected to the cylinder chamber 61a.

The plunger 63 includes a V-plane 63a, a piston 63c, and a rod 63b. The plunger 63 reciprocates in the radial direction inside the cylinder 61. The piston 63c slides inside the cylinder chamber 61a. The V-plane 63a is disposed at the distal end of the piston 63c. The V-plane 63a comes into contact with the roller cams 71. The rod 63b is connected to the basal end of the piston 63c to extend through the rod hole 61b. The cam follower 65 is disposed at the basal end of the rod 63b.

The compression coil spring 67 is disposed inside the cylinder chamber 61a. The compression coil spring 67 biases the piston 63c toward distal end.

The shutter 731 is disposed on the magazine disk 551. The shutter 731 has a rectangular shape as viewed in the radial direction. The shutter 731, which is C-shaped as viewed from the front (-Z direction), has a central portion recessed radially inward. The shutter 731 and the tool holding portion 591 rotate integrally with the magazine disk 551. At the processing position 5 (see FIG. 1), the shutter centerline 7 passes through the tool changing position 81. When the shutter 731 is at the processing position 5, the shape of the shutter 731 coincides with the shape of the tool change port 531a as viewed from Z-direction. The shutter 731 covers substantially the entire surface of the tool change port 531a. As the magazine disk 551 rotates, the shutter 731 is housed in the magazine cover 531.

A method of using the first ATC 511 will be described.

In the tool holding portion 591b, the cam follower 65 abuts against the cam 571. The plunger 63 thus cannot move toward the center direction. The V-plane 63a of the plunger 63 comes into contact with the roller cam 71. Further, the plunger 63 is biased toward the distal end by the spring 67. The pinch lever 69 is thus biased in the closing direction. The tool 1 held by the tool holding portion 591b is thus prevented from being detached from the tool holding portion 591b.

Referring to FIGs. 7 and 8, a method of passing the tool 1 mounted on the first spindle 291c to the tool holding portion 591 by the first spindle 291c will be described. As shown in FIG. 7, the first spindle 291c is stopped in advance so that the keyway 1b faces -X direction. Then, the first spindle 291c moves along the arrow 3 in -X direction to move to the tool changing position 81. At this time, as shown by the two-dot chain line in FIG. 7, the pinch lever 69 abuts against a flange portion (not shown) of the tool 1 and is pushed open. The contour 571a is recessed in +X direction by the stroke length 571c. The plunger 63 thus moves toward the basal end along the arrow 4 against the elastic force of the spring 67. Then, as the plunger 63 moves, the pinch lever 69 is once opened. When the first spindle 291c arrives at the tool changing position 81, the key 72 is received into the keyway 1b. The plunger 63 is then pushed back toward the distal end by the spring 67. This closes the claw portion 69a and the pinch lever 69 holds the tool 1.

Next, as shown in FIG. 8, the first spindle 291c moves in +Z direction along the arrow 5. As the first spindle 291c moves, the unclamping device 291f unclamps the tool 1. As a result, the tool 1 comes out of the first spindle hole 291e. Then, the tool 1 is transferred from the first spindle 291c to the first ATC 511.

When the first ATC 511 passes the tool 1 to the first spindle 291c, it reversely performs the steps of the above-described replacement methods. That is, in FIG. 8, the first spindle 291c moves in the opposite direction (-Z direction) of the arrow 5, and the unclamping device 291f clamps the tool 1. Next, in FIG. 7, the first spindle 291c moves in the opposite direction (+X direction) of the arrow 3.

As shown in FIGs. 1 and 7, the second ATC 512 includes a frame 502, a magazine cover (first magazine cover) 532, a magazine disk (first magazine disk) 552, a cam 572, a motor 562 (see FIG. 8), a plurality of tool holding portions (first tool holding portions) 592, and a shutter (first shutter) 732. The magazine cover 532 has a tool change port (first tool change port) 532a. The second ATC 512 is substantially the same as the first ATC 511. The second ATC 512 is disposed in -Y direction (first Y direction) from the first ATC 511. The magazine cover 532 is integral with the magazine cover 531.

As shown in FIG. 1, the third ATC 513 and the fourth ATC 514 are disposed in the +X side from the second processing unit group 22. The third ATC 513 and the fourth ATC 514 are symmetrical to the first ATC 511 and the second ATC 512 with respect to YZ plane. The fourth ATC 514 is disposed in -Y direction (first Y direction) from the third ATC 513. When the third spindle 293c replaces the tool 1 from the third ATC 513, the third spindle 293c moves in +X direction and moves to the tool changing position 83. At this time, the fourth spindle 294c moves to the tool changing position 84 in XY plane.

As shown in FIGs. 1 and 7, the third ATC 513 includes a frame 503, a magazine cover (second magazine cover) 533, a magazine disk (second magazine disk) 553, a cam 573, a motor 563, a plurality of tool holding portions (second tool holding portions) 593, and a shutter (second shutter) 733. The magazine cover 533 has a tool change port (second tool change port) 533a.

The fourth ATC 514 includes a frame 504, a magazine cover (second magazine cover) 534, a magazine disk (second magazine disk) 554, a cam 574, a motor 564, a plurality of tool holding portions (second tool holding portions) 594, and a shutter (second shutter) 734. The magazine cover 534 has a tool change port (second tool change port) 534a. The magazine cover 534 is integral with the magazine cover 533.

The lateral processing machine 10 according to the present embodiment achieves the following effects.

The bellows cover 40 includes a first X box 431 and two Y boxes 441, 442. When the first X box 431 is tilted, the first X box 431 is prevented from moving. Then, damage to the first X bellows 451 and the second X bellows 452 is promoted.

In contrast, in the present embodiment, the two Y boxes 441, 442 are supported by the first body 291a and the second body 292a, respectively. The first body 291a and the second body 292a are guided by the first Y-axis guide 271. Thus, when the first spindle 291c and the second spindle 292c move freely in XYZ direction, the first body 291a and the second body 292a are positioned parallel to the Y-axis. As a result, the inclination of the first X box 431 from the Y direction is suppressed. The first X box 431 is thus moved smoothly. In addition, damage to the first X bellows 451 and the second X bellows 452 is suppressed.

The second X box 432 is also substantially the same as the first X box 431.

The tool change port 531a and the shutter 731 are recessed in -X direction as viewed from Z direction. Thus, when the shutter 731 is at the processing position 5, the first spindle 291c can be moved to the tool changing position 81.

Both the first processing unit 291 and the second processing unit 292 are arranged in the first moving column 211. The first spindle 291c moves to the tool changing position 81 when the first spindle 291c exchanges the tool 1 with the first ATC 511. At the same time, the second spindle 292c moves to the tool changing position 83.

When the first spindle 291c exchanges the tool 1 with the first ATC 511, the second spindle 292c can simultaneously exchange the tool 1 with the second ATC 512.

When the first spindle 291c exchanges the tool 1 with the first ATC 511while the second spindle 292c does not exchange the tool 1 with the second ATC 512, the shutter 732 is positioned at the processing position 5. At this time, the tool change port 532a and the shutter 732 are recessed in -X direction as viewed from Z direction. The second spindle 292c thus does not collide with the second ATC 512.

Even when the second spindle 292c exchanges the tool 1 with the second ATC 512 while the first spindle 291c does not exchange the tool 1 with the first ATC 511, the first spindle 291c does not collide with the first ATC 511.

The relationship between the third spindle 293c, the fourth spindle 294c and the third ATC 513, the fourth ATC 514 is substantially the same as the relationship between the first spindle 291c, the second spindle 292c and the first ATC 511, the second ATC 512.

### Reference Signs List

- 1: Tool
- 11: Bed
- 13: Floor surface X-axis guide
- 211: First moving column
- 271: First Y-axis guide
- 291: First processing unit
- 291b: First ram
- 291c: First spindle
- 292: Second processing unit
- 292b: Second ram
- 292c: Second spindle
- 40: Bellows cover (expansion cover)
- 41: Box cover
- 431: First X Box
- 441: First Y Box
- 442: Second Y Box
- 451: First X bellows (First X telescopic cover)
- 471: First Y bellows (First Y telescopic cover)
- 472: Second Y bellows (second Y telescopic cover)
- 473: Third Y bellows (Third Y telescopic cover)
- 511: First ATC (First tool changer)
- 512: Second ATC (Second tool changer)
- 81: First tool changing position
- 82: Second tool changing position

## Claims

1. A lateral processing machine (10), comprising:
a bed (11);
a floor surface X-axis guide (13) disposed on an upper surface of the bed (11);
a first moving column (211) guided by the floor surface X-axis guide (13) to reciprocate in X direction;
a first Y-axis guide (271) disposed on the first moving column (211);
a first processing unit (291) guided by the first Y-axis guide (271) to reciprocate in Y direction, the first processing unit (291) includes a first ram (291b) that rotatably supports a first spindle (291c) and advances or retracts in Z direction;
a second processing unit (292) guided by the first Y-axis guide (271) to reciprocate in Y direction, the second processing unit (292) includes a second ram (292b) that rotatably supports a second spindle (292c) and advances or retract in Z direction; and
an expansion cover (40) including,
a box cover (41) disposed on the bed (11),
a first X box (431) extending in Y direction inside the box cover (41) to reciprocate in X direction together with the first moving column (211),
a first X telescopic cover (451) configured to cover between the first X box (431) and the box cover (41),
a first Y box (441) receiving the first ram (291b) to extend through, the first Y box (441) configured to reciprocate in Y direction inside the first X box (431),
a second Y box (442) receiving the second ram (292b) to extend through, the second Y box (442) configured to reciprocate in Y direction inside the first X box (431),
a first Y telescopic cover (471) configured to cover between the first Y box (441) and the first X box (431),
a second Y telescopic cover (472) configured to cover between the first Y box (441) and the second Y box (442), and
a third Y telescopic cover (473) configured to cover between the second Y box (442) and the first X box (431).

2. The lateral processing machine (10) according to claim 1, further comprising:
a second moving column (212) disposed in a first X direction (+X) from the first moving column (211), the second moving column (212) guided by the floor surface X-axis guide (13) to reciprocate in X direction;
a second Y-axis guide (272) disposed on the second moving column (212);
a third processing unit (293) guided by the second Y-axis guide (272) to reciprocate in Y direction, the third processing unit (293) includes a third ram (293b) that rotatably supports a third spindle (293c) and advances or retracts in Z direction;
a fourth processing unit (294) guided by the second Y-axis guide (272) to reciprocate in Y direction, the fourth processing unit (294) includes a fourth ram (294b) that rotatably supports a fourth spindle (294c) and advances or retract in Z direction;
wherein the expansion cover (40) includes,
a second X box (432) extending in Y direction inside the box cover (41) to reciprocate in X direction together with the second moving column (212),
a second X telescopic cover (452) configured to cover between the first X box (431) and the second X box (432),
a third X telescopic cover (453) configured to cover between the second X box (432) and the box cover (41),
a third Y box (443) receiving the third ram (293b) to extend through, the third Y box (443) configured to reciprocate in Y direction inside the second X box (432),
a fourth Y box (444) receiving the fourth ram (294b) to extend through, the fourth Y box (444) configured to reciprocate in Y direction inside the second X box (432),
a fourth Y telescopic cover (474) configured to cover between the third Y box (443) and the second X box (432),
a fifth Y telescopic cover (475) configured to cover between the third Y box (443) and the fourth Y box (444), and
a sixth Y telescopic cover (476) configured to cover between the fourth Y box (444) and the second X box (432).

3. The lateral processing machine (10) according to claim 1 or 2, further comprising:
a pair of fixed support columns (15) disposed at both ends of the bed (11) in X direction;
a fixed beam (17) bridged between upper ends of the pair of the fixed support columns (15); and
an upper X-axis guide (19) disposed on the fixed beam (17).

4. The lateral processing machine (10) according to any one of claims 1 to 3, further comprising:
a first lower X-axis driving device (231) disposed on the bed (11) to drive a lower end portion of the first moving column (211) in X direction; and
a first upper X-axis driving device (251) disposed above the bed (11) to drive an upper end portion of the first moving column (211) in X direction in synchronization with the first lower X-axis driving device (231).

5. The lateral processing machine (10) according to any one of claims 2 to 4,
wherein
the first Y-axis guide (271) is disposed on a lateral side of the first moving column (211) in the first X direction (+X),
the first processing unit (291) and the second processing unit (292) are disposed on the lateral side of the first moving column (211) in the first X direction (+X),
the second Y-axis guide (272) is disposed on a lateral side of the second moving column (212) in a second X direction (-X), the second X direction (-X) being opposite direction of the first X direction (+X), and
the third processing unit (293) and the fourth processing unit (294) are disposed on the lateral side of the second moving column (212) in the second X direction (-X).

6. The lateral processing machine (10) according to claim 4, wherein
the first lower X-axis driving device (231) includes,
a lower X helical rack (231a) disposed on the bed (11),
a first lower X helical gear (231c) configured to mesh with the lower X helical rack (231a), and
a lower X motor (231b) connected to the first lower X helical gear (231c), the lower X motor (231b) disposed on a lower end portion of the first moving column (211),
the first upper X-axis driving device (251) includes,
an upper X helical rack (251a) disposed on the fixed beam (17),
a first upper X helical gear (251c) configured to mesh with the upper X helical rack (251a), and
an upper X motor (251b) connected to the first upper X helical gear (251c), the upper X motor (251b) disposed on an upper end portion of the first moving column (211).

## Patentansprüche

1. Seitenbearbeitungsmaschine (10), die aufweist:
ein Bett (11);
eine Bodenflächen-X-Achsenführung (13), die auf einer oberen Fläche des Bettes (11) angeordnet ist;
eine erste bewegliche Säule (211), die von der Bodenflächen-X-Achsenführung (13) geführt wird, um sich in X-Richtung hin und her zu bewegen;
eine erste Y-Achsenführung (271), die an der ersten beweglichen Säule (211) angeordnet ist;
eine erste Bearbeitungseinheit (291), die von der ersten Y-Achsenführung (271) geführt wird, um sich in Y-Richtung hin- und herzubewegen, wobei die erste Bearbeitungseinheit (291) einen ersten Stößel (291b) aufweist, der eine erste Spindel (291c) drehbar hält und sich in Z-Richtung vorwärts bewegt oder zurückzieht;
eine zweite Bearbeitungseinheit (292), die von der ersten Y-Achsenführung (271) geführt wird, um sich in Y-Richtung hin- und herzubewegen, wobei die zweite Bearbeitungseinheit (292) einen zweiten Stößel (292b) aufweist, der eine zweite Spindel (292c) drehbar hält und sich in Z-Richtung vorwärts bewegt oder zurückzieht; und
eine Erweiterungsabdeckung (40), die aufweist,
eine auf dem Bett (11) angeordnete Kastenabdeckung (41),
einen ersten X-Kasten (431), der sich in Y-Richtung innerhalb der Kastenabdeckung (41) erstreckt, um sich zusammen mit der ersten beweglichen Säule (211) in X-Richtung hin und her zu bewegen,
eine erste X-Teleskopabdeckung (451), die konfiguriert ist, zwischen dem ersten X-Kasten (431) und der Kastenabdeckung (41) abzudecken,
einen ersten Y-Kasten (441), der den ersten Stößel (291b) aufnimmt, so dass er sich hindurch erstreckt, wobei der erste Y-Kasten (441) konfiguriert ist, sich in Y-Richtung innerhalb des ersten X-Kastens (431) hin- und herzubewegen,
einen zweiten Y-Kasten (442), der den zweiten Stößel (292b) aufnimmt, so dass er sich hindurch erstreckt, wobei der zweite Y-Kasten (442) konfiguriert ist, sich in Y-Richtung innerhalb des ersten X-Kastens (431) hin- und herzubewegen,
eine erste Y-Teleskopabdeckung (471), die konfiguriert ist, zwischen dem ersten Y-Kasten (441) und dem ersten X-Kasten (431) abzudecken, eine zweite Y-Teleskopabdeckung (472), die konfiguriert ist, zwischen dem ersten Y-Kasten (441) und dem zweiten Y-Kasten (442) abzudecken, und
eine dritte Y-Teleskopabdeckung (473), die konfiguriert ist, zwischen dem zweiten Y-Kasten (442) und dem ersten X-Kasten (431) abzudecken.

2. Seitenbearbeitungsmaschine (10) nach Anspruch 1, die ferner aufweist:
eine zweite bewegliche Säule (212), die in einer ersten X-Richtung (+X) von der ersten beweglichen Säule (211) angeordnet ist, wobei die zweite bewegliche Säule (212) durch die X-Achsenführung (13) der Bodenfläche geführt wird, um sich in X-Richtung hin und her zu bewegen;
eine zweite Y-Achsenführung (272), die an der zweiten beweglichen Säule (212) angeordnet ist;
eine dritte Bearbeitungseinheit (293), die von der zweiten Y-Achsenführung (272) geführt wird, um sich in Y-Richtung hin- und herzubewegen, wobei die dritte Bearbeitungseinheit (293) einen dritten Stößel (293b) aufweist, der eine dritte Spindel (293c) drehbar hält und sich in Z-Richtung vorwärts bewegt oder zurückzieht;
eine vierte Bearbeitungseinheit (294), die von der zweiten Y-Achsenführung (272) geführt wird, um sich in Y-Richtung hin- und herzubewegen, wobei die vierte Bearbeitungseinheit (294) einen vierten Stößel (294b) aufweist, der eine vierte Spindel (294c) drehbar hält und sich in Z-Richtung vorwärts bewegt oder zurückzieht;
wobei die Erweiterungsabdeckung (40) aufweist,
einen zweiten X-Kasten (432), der sich in Y-Richtung innerhalb der Kastenabdeckung (41) erstreckt, um sich zusammen mit der zweiten beweglichen Säule (212) in X-Richtung hin- und herzubewegen,
eine zweite X-Teleskopabdeckung (452), die konfiguriert ist, zwischen dem ersten X-Kasten (431) und dem zweiten X-Kasten (432) abzudecken, eine dritte X-Teleskopabdeckung (453), die konfiguriert ist, zwischen dem zweiten X-Kasten (432) und dem Kastendeckel (41) abzudecken,
einen dritten Y-Kasten (443), der den dritten Stößel (293b) aufnimmt, so dass er sich hindurch erstreckt, wobei der dritte Y-Kasten (443) konfiguriert ist, sich in Y-Richtung innerhalb des zweiten X-Kastens (432) hin- und herzubewegen,
einen vierten Y-Kasten (444), der den vierten Stößel (294b) aufnimmt, so dass er sich hindurch erstreckt, wobei der vierte Y-Kasten (444) konfiguriert ist, sich in Y-Richtung innerhalb des zweiten X-Kastens (432) hin- und herzubewegen,
eine vierte Y-Teleskopabdeckung (474), die konfiguriert ist, zwischen dem dritten Y-Kasten (443) und dem zweiten X-Kasten (432) abzudecken, eine fünfte Y-Teleskopabdeckung (475), die konfiguriert ist, zwischen dem dritten Y-Kasten (443) und dem vierten Y-Kasten (444) abzudecken, und eine sechste Y-Teleskopabdeckung (476), die konfiguriert ist, zwischen dem vierten Y-Kasten (444) und dem zweiten X-Kasten (432) abzudecken.

3. Seitenbearbeitungsmaschine (10) nach Anspruch 1 oder 2, die ferner aufweist:
ein Paar fester Stützsäulen (15), die an beiden Enden des Bettes (11) in X-Richtung angeordnet sind;
einen festen Träger (17), der zwischen den oberen Enden des Paares der festen Stützsäulen (15) überbrückt ist; und
eine obere X-Achsenführung (19), die an dem festen Träger (17) angeordnet ist.

4. Seitenbearbeitungsmaschine (10) nach einem der Ansprüche 1 bis 3, die ferner aufweist
eine erste untere X-Achsen-Antriebsvorrichtung (231), die auf dem Bett (11) angeordnet ist, um einen unteren Endabschnitt der ersten beweglichen Säule (211) in X-Richtung anzutreiben; und
eine erste obere X-Achsen-Antriebsvorrichtung (251), die über dem Bett (11) angeordnet ist, um einen oberen Endabschnitt der ersten beweglichen Säule (211) in X-Richtung synchron mit der ersten unteren X-Achsen-Antriebsvorrichtung (231) anzutreiben.

5. Seitenbearbeitungsmaschine (10) nach einem der Ansprüche 2 bis 4, wobei die erste Y-Achsenführung (271) auf einer lateralen Seite der ersten beweglichen Säule (211) in der ersten X-Richtung (+X) angeordnet ist,
die erste Bearbeitungseinheit (291) und die zweite Bearbeitungseinheit (292) auf der lateralen Seite der ersten beweglichen Säule (211) in der ersten X-Richtung (+X) angeordnet sind,
die zweite Y-Achsenführung (272) auf einer lateralen Seite der zweiten beweglichen Säule (212) in einer zweiten X-Richtung (-X) angeordnet ist, wobei die zweite X-Richtung (-X) entgegengesetzt zu der ersten X-Richtung (+X) ist, und
die dritte Verarbeitungseinheit (293) und die vierte Verarbeitungseinheit (294) auf der lateralen Seite der zweiten beweglichen Säule (212) in der zweiten X-Richtung (-X) angeordnet sind.

6. Seitenbearbeitungsmaschine (10) nach Anspruch 4, wobei
die erste untere X-Achsen-Antriebsvorrichtung (231) aufweist,
eine untere X-Schrägzahnstange (231a), die auf dem Bett (11) angeordnet ist,
ein erstes unteres X-Schrägzahnrad (231c), das konfiguriert ist, mit der unteren X-Schrägzahnstange (231a) in Eingriff zu treten, und
einen unteren X-Motor (231b), der mit dem ersten unteren X-Schrägzahnrad (231c) verbunden ist, wobei der untere X-Motor (231b) an einem unteren Endabschnitt der ersten beweglichen Säule (211) angeordnet ist,
die erste obere X-Achsen-Antriebsvorrichtung (251) aufweist,
eine obere X-Schrägzahnstange (251a), die an dem festen Träger (17) angeordnet ist,
ein erstes oberes X-Schrägzahnrad (251c), das konfiguriert ist, mit der oberen schrägverzahnten X-Zahnstange (251a) in Eingriff zu treten, und einen oberen X-Motor (251b), der mit dem ersten oberen X-Schrägzahnrad (251c) verbunden ist, wobei der obere X-Motor (251b) an einem oberen Endabschnitt der ersten beweglichen Säule (211) angeordnet ist.

## Revendications

1. Machine d'usinage latéral (10), comprenant :
un banc (11) ;
un guide d'axe X de surface de plancher (13) disposé sur une surface supérieure du banc (11) ;
une première colonne mobile (211) guidée par le guide d'axe X de surface de plancher (13) pour effectuer un mouvement alternatif dans la direction X ;
un premier guide d'axe Y (271) disposé sur la première colonne mobile (211) ; une première unité d'usinage (291) guidée par le premier guide d'axe Y (271) pour effectuer un mouvement alternatif dans la direction Y, ladite première unité d'usinage (291) comprenant un premier piston (291b) supportant de manière rotative une première broche (291c) et avançant ou reculant dans une direction Z ;
une deuxième unité d'usinage (292) guidée par le premier guide d'axe Y (271) pour effectuer un mouvement alternatif dans la direction Y, ladite deuxième unité d'usinage (292) comprenant un deuxième piston (292b) supportant de manière rotative une deuxième broche (292c) et avançant ou reculant dans la direction Z ; et
un couvercle d'expansion (40) comprenant
un couvercle de boîtier (41) disposé sur le banc (11),
un premier boîtier X (431) s'étendant dans la direction Y à l'intérieur du couvercle du boîtier (41) de manière à effectuer un mouvement alternatif dans la direction X avec la première colonne mobile (211),
un premier couvercle télescopique X (451) prévu pour couvrir l'espace entre le premier boîtier X (431) et le couvercle de boîtier (41),
un premier boîtier Y (441) recevant le premier piston (291b) qui s'y étend, ledit premier boîtier Y (441) étant prévu pour effectuer un mouvement alternatif dans la direction Y à l'intérieur du premier boîtier X (431),
un deuxième boîtier Y (442) recevant le deuxième piston (292b) qui s'y étend, ledit deuxième boîtier Y (442) étant prévu pour effectuer un mouvement alternatif dans la direction Y à l'intérieur du premier boîtier X (431),
un premier couvercle télescopique Y (471) prévu pour couvrir l'espace entre le premier boîtier Y (441) et le premier boîtier X (431),
un deuxième couvercle télescopique Y (472) prévu pour couvrir l'espace entre le premier boîtier Y (441) et le deuxième boîtier Y (442), et
un troisième couvercle télescopique Y (473) prévu pour couvrir l'espace entre le deuxième boîtier Y (442) et le premier boîtier X (431).

2. Machine d'usinage latéral (10) selon la revendication 1 , comprenant en outre :
une deuxième colonne mobile (212) disposée dans une première direction X (+X) à partir de la première colonne mobile (211), ladite deuxième colonne mobile (212) étant guidée par le guide d'axe X de surface de plancher (13) pour effectuer un mouvement alternatif dans la direction X ;
un deuxième guide d'axe Y (272) disposé sur la deuxième colonne mobile (212) ;
une troisième unité d'usinage (293) guidée par le deuxième guide d'axe Y (272) pour effectuer un mouvement alternatif dans la direction Y, ladite troisième unité d'usinage (293) comprenant un troisième piston (293b) supportant de manière rotative une troisième broche (293c) et avançant ou reculant dans la direction Z ;
une quatrième unité d'usinage (294) guidée par le deuxième guide d'axe Y (272) pour effectuer un mouvement alternatif dans la direction Y, ladite quatrième unité d'usinage (294) comprenant un quatrième piston (294b) supportant de manière rotative une quatrième broche (294c) et avançant ou
reculant dans la direction Z ;
où le couvercle d'expansion (40) comprend
un deuxième boîtier X (432) s'étendant dans la direction Y à l'intérieur du couvercle du boîtier (41) de manière à effectuer un mouvement alternatif dans la direction X avec la deuxième colonne mobile (212),
un deuxième couvercle télescopique X (452) prévu pour couvrir l'espace entre le premier boîtier X (431) et le deuxième boîtier X (432),
un troisième couvercle télescopique X (453) prévu pour couvrir l'espace entre le deuxième boîtier X (432) et le couvercle de boîtier (41),
un troisième boîtier Y (443) recevant le troisième piston (293b) qui s'y étend, ledit troisième boîtier Y (443) étant prévu pour effectuer un mouvement alternatif dans la direction Y à l'intérieur du deuxième boîtier X (432),
un quatrième boîtier Y (444) recevant le quatrième piston (294b) qui s'y étend, ledit quatrième boîtier Y (444) étant prévu pour effectuer un mouvement alternatif dans la direction Y à l'intérieur du deuxième boîtier X (432),
un quatrième couvercle télescopique Y (474) prévu pour couvrir l'espace entre le troisième boîtier Y (443) et le deuxième boîtier X (432),
un cinquième couvercle télescopique Y (475) prévu pour couvrir l'espace entre le troisième boîtier Y (443) et le quatrième boîtier Y (444), et
un sixième couvercle télescopique Y (476) prévu pour couvrir l'espace entre le quatrième boîtier Y (444) et le deuxième boîtier X (432).

3. Machine d'usinage latéral (10) selon la revendication 1 ou la revendication 2, comprenant en outre :
une paire de colonnes de support fixes (15) disposées aux deux extrémités du banc (11) dans la direction X ;
une traverse fixe (17) placée entre les extrémités supérieures de la paire de colonnes de support fixes (15) ; et
un guide d'axe X supérieur (19) disposé sur la traverse fixe (17).

4. Machine d'usinage latéral (10) selon l'une des revendications 1 à 3, comprenant en outre :
un premier dispositif d'entraînement d'axe X inférieur (231) disposé sur le banc (11) pour entraîner une extrémité inférieure de la première colonne mobile (211) dans la direction X ; et
un premier dispositif d'entraînement d'axe X supérieur (251) disposé au-dessus du banc (11) pour entraîner une extrémité supérieure de la première colonne mobile (211) dans la direction X en synchronisation avec le premier dispositif d'entraînement d'axe X inférieur (231).

5. Machine d'usinage latéral (10) selon l'une des revendications 2 à 4, où le premier guide d'axe Y (271) est disposé sur un côté latéral de la première colonne mobile (211) dans la première direction X (+X),
la première unité d'usinage (291) et la deuxième unité d'usinage (292) sont disposées sur le côté latéral de la première colonne mobile (211) dans la première direction X (+X),
le deuxième guide d'axe Y (272) est disposé sur un côté latéral de la deuxième colonne mobile (212) dans une deuxième direction X (-X), ladite deuxième direction X (-X) étant la direction opposée à la première direction X (+X), et la troisième unité d'usinage (293) et la quatrième unité d'usinage (294) sont disposées sur le côté latéral de la deuxième colonne mobile (212) dans la deuxième direction X (-X).

6. Machine d'usinage latéral (10) selon la revendication 4, où
le premier dispositif d'entraînement d'axe X inférieur (231) comprend
une crémaillère hélicoïdale X inférieure (231a) disposée sur le banc (11), un premier engrenage hélicoïdal X inférieur (231c) prévu pour s'engrener avec la crémaillère hélicoïdale X inférieure (231 a), et
un moteur X inférieur (231b) raccordé au premier engrenage hélicoïdal X inférieur (231c), ledit moteur X inférieur (231b) étant disposé sur une partie d'extrémité inférieure de la première colonne mobile (211),
le premier dispositif d'entraînement de l'axe X supérieur (251) comprend
une crémaillère hélicoïdale X supérieure (251a) disposée sur la traverse fixe (17),
un premier engrenage hélicoïdal X supérieur (251c) prévu pour s'engrener avec la crémaillère hélicoïdale X supérieure (251a), et
un moteur X supérieur (251b) connecté au premier engrenage hélicoïdal X supérieur (251c), ledit moteur X supérieur (251b) étant disposé sur une partie d'extrémité supérieure de la première colonne mobile (211).
